# EUROPÄISCHE PATENTSCHRIFT

(11) **EP 1 544 252 B1**
(45) Veröffentlichungstag und Bekanntmachung des Hinweises auf die Patenterteilung: **20.09.2006**
(21) Anmeldenummer: 04027991.1
(22) Anmeldetag: 25.11.2004
(51) Int. Cl.: C08L 83/04, C08G 77/32, C08K 5/17, C07F 7/18

(54) **Lagerstabile Zusammensetzungen von Organosiliciumverbindungen**
Storage stable compositions of organo silicon compounds
Compositions à base de composés organosiliciés stables au stockage

(30) Priorität: 18.12.2003 DE 10359588
(43) Veröffentlichungstag der Anmeldung: 22.06.2005
(73) Patentinhaber: Wacker Chemie AG, 81737 München (DE)
(72) Erfinder: Ackermann, Hartmut Dr., 84489 Burghausen (DE)
(74) Vertreter: Fritz, Helmut

(56) Entgegenhaltungen:
- EP-A- 0 197 540
- US-A- 4 460 726
- US-B1- 6 265 496
- US-B1- 6 590 117

## Beschreibung

Die Erfindung betrifft lagerstabile Zusammensetzungen von Organosiliciumverbindungen, welche Aminogruppe enthaltende Verbindung enthalten und ein Verfahren zur Stabilisierung von Organosiliciumverbindungen.

Organosiliciumverbindungen, wie Silane und Organosilane, Polysiloxane und Organopolysiloxane -basierende Zusammensetzungen werden in vielen Bereichen angewendet, beispielsweise als Haftvermittler, Vernetzer in Polymeren, als Trennmittel, als Zusatzstoffe in Farben und Lacken, für die Hydrophobierung von Oberflächen, u. a. für Textilien, Leder und insbesondere für den Schutz von Bauten.und Fassaden, für die Buchkonservierung, für die besondere Modifizierung der Eigenschaften von Oberflächen, wie die Beschichtung von Glasfasern oder die Silanisierung von Füllstoffen und Pigmenten, aber auch für die Verbesserung der rheologischen Eigenschaften von Polymerdispersionen und Emulsionen.

Für die Herstellung von Silanen und/oder Organosilanen, welche an Siliciumatome gebundene Hydroxyl- und/oder Kohlenwasserstoffoxygruppen, wie Alkoxygruppen aufweisen, setzt man in der Regel Halogensilane, insbesondere Chlorsilane, ein. Die Umsetzung eines Halogensilans mit einem Alkohol unter Erhalt eines Alkoxysilans ist dem Fachmann an sich bekannt und wird auch als Veresterung bezeichnet. Durch Hydrolyse von Halogensilanen, deren Teilalkoxylaten und/oder Alkoxysilanen in wässrigem, sauren Milieu bilden sich Polysiloxane bzw. Organopolysiloxane. Bei der Umsetzung von Trihalogensilanen mit Alkohol nehmen die Gleichgewichtskonstanten von der ersten bis zur dritten Stufe hin ab. Das heißt, daß besonders die dritte Alkoxygruppe schwierig einzuführen ist bzw. daß eingeführte dritte Alkoxygruppen leicht mit Halogenwasserstoff unter Rückbildung einer Halogensilan- und/oder Halogensiloxanstruktur reagieren. Diese sind reaktiv und kondensieren bei der Aufarbeitung oder der Lagerung in Substanz, als Lösung oder Emulsion. Auch nach destillativer Reinigung des Produkts verbleiben Resthalogengehalte, d. h. Restmengen an saurem bzw. hydrolysierbarem Hallogenid in den Silanen, Organosilanen, Polysiloxanen bzw. Organopolysiloxanen.
Dieses Halogenid Si-Hal reagiert mit z.B. Silanolgruppen Si-OH, Luftfeuchtigkeit, Restspuren von Wasser oder Alkohol über die Lagerdauer zu Halogenwasserstoff, welcher als Kondensationskatalysator zur Viskositätssteigerung der Silane bzw. Polysiloxane bis hin zum Gelieren der Polysiloxane führen kann.

Des weiteren werden durch Kondensationsschritte bei Silanen und Organosiloxanen, welche an Siliciumatome gebundene Hydroxyl- und/oder Alkoxygruppen aufweisen, Wasser und/oder Alkohol freigesetzt. Spuren von Wasser führen bei Alkoxysilanen zu ungewünschter Bildung von Siloxanen. Der unerwünschte VOC-Anteil des freien Alkohols wird dabei erhöht.

Heutzutage ist man bestrebt, Organosiliciumverbindungen und Produkte, die Organosiliciumverbindungen enthalten, sowie Organosiliciumverbindungen basierende Zusammensetzungen mit möglichst geringen Halogenidgehalten herzustellen. Insbesondere werden Produkte mit einem möglichst niedrigen Halogenidgehalt gewünscht.

In GB 594154 ist die Stabilisierung von Organosiloxanen gegen die Einwirkung von Hitze und Sauerstoff mit Hilfe von 0,05 bis 5 Gew.-% eines organischen Amins beschrieben. Derartig grosse Mengen an Amin wirken sich verkürzend auf die Lagerstabilität von Hydroxyl- und/oder Kohlenwasserstoffoxygruppen enthaltenden Organosiloxanen aus, da sie deren Gelierung bei Raumtemperatur fördern.

EP 197540 A beschreibt die Stabilisierung von linearen Organosiloxanölen und thiofunkticnellen Organosiloxanen, gegen die Einwirkung von Hitze und gegebenenfalls Kaolin durch Zusatz eines organischen Amins.

Es bestand die Aufgabe, eine kostengünstige und technisch leicht zu realisierende Möglichkeit zur Verbesserung der Lagerstabilität von Organosiliciumverbindungen, insbesondere harzartigen Siloxanen und zu Harzen kondensierbaren Silanen bereitzustellen, welche an Siliciumatome gebundene Hydroxyl- und/oder Kohlenwasserstoffoxygruppen aufweisen.

Gegenstand der Erfindung sind lagerstabile Zusammensetzungen von Organosiliciumverbindungen, welche enthalten
(A) Organosiliciumverbindungen, die ausgewählt werden aus Silanen (A1) der allgemeinen Formel 1

   RₓSi (OR¹)₄₋ₓ (1),

   und harzartigen Organopolysiloxanen (A2), die Einheiten der allgemeinen Formel 2 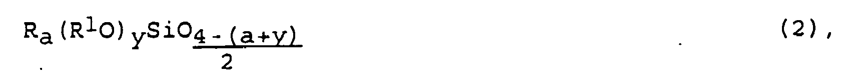 enthalten und Gruppen aufweisen, die ausgewählt werden aus an Siliciumatome gebundenen Hydroxylgruppen und an Siliciumatome gebundenen C₁- bis C₁₈₋Kohlenwasserstoffoxygruppen, wobei
   - R: einwertige SiC-gebundene, gegebenenfalls substituierte C₁- bis C₁₈₋Kohlenwasserstoffreste,
   - R¹: ein Wasserstoffatom oder einwertige, gegebenenfalls substituierte C₁- bis C₁₈₋Kohlenwasserstoffreste,
   - x: die Werte 0, 1, 2 oder 3
   - a: die Werte 0, oder 1 durchschnittlich 0,5 bis 1,5 und
   - y: die Werte 1, 2 oder 3 bedeuten und
(B) 1 bis 499 Gew.-ppm, bezogen auf die Organosiliciumverbindungen (A) an Aminogruppe enthaltender Verbindung.

Die Erfindung beruht auf der Erkenntnis, dass bei Organosiliciumverbindungen (A) bei üblichen Lagertemperaturen von 0 bis 100 °C, vorzugsweise 5 bis 70 °C, eine begrenzte Menge an primären, sekundären bzw. tertiäre Aminogruppe enthaltender Verbindung (B) die Lagerstabilität deutlich erhöht. Wird diese Menge überschritten, so wird die Lagerstabilität wieder verschlechtert.

Die Restmengen an Halogenid Si-Hal in den Organosiliciumverbindungen (A), welche allmählich beim Lagern zu Halogenwasserstoff umgesetzt werden, können so mit der Verbindung (B) neutralisiert werden. Vorzugsweise werden 5 bis 250 Gew.-ppm, insbesondere 10 bis 150 Gew.-ppm, bezogen auf die Organosiliciumverbindungen (A) an Aminogruppe enthaltender Verbindung (B) eingesetzt. Die optimale Menge an Verbindung (B) lässt sich ermitteln, indem durch an sich bekannte Extraktionsverfahren Verbindung (B) bzw. das daraus gebildete Halogenidsalz abgetrennt und analysiert werden.

Das sich bildende Aminhydrohalogenid muss nicht herausfiltriert werden, sondern kann auch in der Zusammensetzung verbleiben. Diese kann ohne Änderung der Rezeptur weiterverarbeitet werden. Weder Wasser noch Alkohol werden mit der Lagerdauer freigesetzt.

Die gegebenenfalls substituierten C₁- bis C₁₈₋Kohlenwasserstoffreste R und R¹ können beispielsweise nicht substituierte Reste sein, insbesondere Alkylreste, wie der Methyl-, Ethyl-, n- Propyl-, iso-Propyl-, n-Butyl-, iso-Butyl-, sec.-Butyl-, tert-Butyl-, n-Pentyl-, iso-Pentyl-, neo-Pentyl-, tert-Pentylrest, Hexylreste, wieder n-Hexylrest, Heptylreste, wie der n-Heptylrest, Oktylreste, wie der n-Octylrest und iso-Oktylreste, wie der 2,2,4- Trimethylpentylrest, Nonylreste, wie der n-Nonylrest, Decylreste, wie der n-Decylrest, Dodecylreste, wie der n-Dodecylrest, Oktadecylreste, wie der n-Oktadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- Naphthyl- und Anthryl- und Phenanthrylrest; Alkarylreste, wie o-, m-, p-Tolylreste, Xylylreste und Ethylphenylreste; AraIkylreste, wie der alpha- und der beta-Phenylethylrest.

Die substituierten C₁- bis C₁₈-Kohlenwasserstoffreste R und R¹ können als Substituenten beispielsweise Halogenatome, oder amino- oder thiogebundene organische Reste, vorzugsweise mit 1 bis 10 Kohlenstoffatomen aufweisen. Beispiele für mit Halogenatomen substituierte Reste sind mit Fluor und Chlor substituiert, wie der 3,3,3- Trifluor-n-propylrest, der 2,2,2,2',2' ,2'-Hexafluorisopropyl-rest, der Heptafluorisopropylrest, und Halogenarylreste, wie der o-, m-, und p-Chlorphenylrest

Bevorzugte Halogengruppen sind Fluor, Chlor und Brom.

Als Reste R sind unsubstituierte Kohlenwasserstoffreste bevorzugt, insbesondere solche mit 1 bis 8 Kohlenstoffatomen, speziell Methyl-, Ethyl-, Vinyl-, Tolyl- und Phenylreste.

Als Reste R¹ sind Wasserstoff und C₁-bis C₁₀-Alkylreste, insbesondere C₁-bis C₆-Alkylreste bevorzugt. Bevorzugte Beispiele sind Methyl-, Ethyl-, n-Propyl-, iso-Propyl-, n-Butyl-, sec.-Butyl-, iso-Butyl- und tert-Butylreste, insbesondere Methyl- und Ethylreste.

Die harzartigen Organopolysiloxane (A2), die Einheiten der allgemeinen Formel 2 enthalten, weisen vorzugsweise zusätzliche Einheiten der allgemeinen Formel 3, 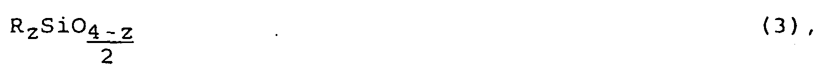 auf, wobei
- z: die Werte 0, 1, 2 oder 3 bedeutet, durchschnittlich vorzugsweise 0,5 bis 2,5, durchschnittlich besonders bevorzugt 0,8 bis 2,3, ist und R die vorstehenden Bedeutungen aufweist.

Vorzugsweise weisen die harzartigen Organopolysiloxane (A2) 1 bis 99 mol-%, insbesondere 10 bis 90 mol-% an Einheiten der allgemeinen Formel 3 auf.

Organopolysiloxan (A2) weist vorzugsweise Viskositäten von 0,5 bis 1 000 000 mPa·s, insbesondere 2 bis 500 000 mPa·s auf.

Die primäre, sekundäre und/oder tertiäre Aminogruppe enthaltende Verbindung (B) hat 1, 2 oder 3 organische Reste an der Aminogruppe. Die organischen Reste können beispielsweise gegebenenfalls halogen-, triorganosilyl- oder cyanosubstituierte c₁-c₃₀-Kohlenwasserstoffreste sein, in denen eine oder mehrere, einander nicht benachbarte Methyleneinheiten durch Gruppen -O-, -CO-, -COO-, -OCO-, oder -OCOO-, -S-, oder - NH- ersetzt sein können und in denen eine oder mehrere, einander nicht benachbarte Methineinheiten durch Gruppen, -N=,-N=N-,oder -P= ersetzt sein können.

Die Triorganosilylsubstituenten weisen vorzugsweise Reste auf, die ausgewählt werden aus c₁-c₁₀-Kohlenwasserstoffresten und C₁-C₆-Kohlenwasserstoffoxyresten.

Die Reste an der Aminogruppe sind vorzugsweise unsubstituierte C₁-C₁₈-Kohlenwasserstoffreste, vorzugsweise c₃-c₁₅-aliphatische Reste.

Beispiele für Verbindung (B) mit Triorganosilylsubstituenten sind aminofunktionelle Silane.

Bevorzugte aminofunktionelle Silane (B) sind solche der allgemeinen Formel 4

R²ᵤR³ᵥSi (OR⁴)₄₋ᵤ₋ᵥ (4),

in der
- R²: einwertige, gegebenenfalls halogensubstituierte, SiC-gebundene C₁-C₂₀-Kohlenwasserstoffreste,
- R³: einwertige, gegebenenfalls halogensubstituierte, SiC-gebundene Aminogruppe aufweisende C₁-C₃₀₋Kohlenwasserstoffreste,
- R⁴: Wasserstoffatom oder C₁-C₆-Alkylreste,
- u: 0, 1 oder 2 und
- v: 1, 2 oder 3 bedeuten,
mit der Maßgabe, daß die Summe aus u und v kleiner oder gleich 3 ist.

Beispiele und bevorzugte Beispiele für den Rest R² sind vorstehend bei Rest R¹ aufgeführt.

Bevorzugt handelt es sich bei Rest R³ um einen Rest der allgemeinen Formel 5

R⁵₂NR⁶- (5),

worin
- R⁵: Wasserstoffatom oder einwertige, gegebenenfalls substituierte C₁-C₁₀-Kohlenwasserstoffreste oder C₁-C₁₀₋Aminokohlenwasserstoffreste und
- R⁶: einen zweiwertigen C₁-C₁₅-Kohlenwasserstoffrest bedeuten.

Beispiele für den Rest R⁵ sind die für Rest R gegebenen Beispiele für Kohlenwasserstoffreste sowie mit Aminogruppen substituierte Kohlenwasserstoffreste, wie Aminoalkylreste, wobei der Aminoethylrest besonders bevorzugt ist.

Bevorzugt handelt es sich bei Rest **R**^{**6**} um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest **R**^{**6**} sind der Methylen-, Ethylen-, Propylen-, Butylen-, Cyclohexylen-, Octadecylen-, Phenylen- und Butenylenrest.

Beispiel für bevorzugte aminofunktionelle Silane (B) sind 3-(-Aminoethylamino)-propyltrimethoxysilan, 3-(-Aminoethylamino)-propyltriethoxysilan, 3-Aminopropyltriethoxysilan, 3-Aminopropyltrimethoxysilan und Methyl-3-(2-aminoethylamino)-propyldimethoxysilan.

Die lagerstabilen Zusammensetzungen können eine Art von Organosiliciumverbindungen (A) oder ein Gemisch aus verschiedenen Organosiliciumverbindungen (A) enthalten.

Ein Zusatz einer geringen Menge an aliphatischem Alkohol kann die lagerstabilen Zusammensetzungen zusätzlich stabilisieren.

Als Zusatzstoffe können die lagerstabilen Zusammensetzungen beispielsweise organische Lösungsmittel, Füllstoffe, Geruchsstoffe oder Korrosionsinhibitoren enthalten.

Gegenstand der Erfindung ist auch ein Verfahren zur Stabilisierung von
(A) Organosiliciumverbindungen, die ausgewählt werden aus Silanen (A1) der allgemeinen Formel 1

   RₓSi(OR¹)₄₋ₓ (1),

   und harzartigen Organopolysiloxanen (A2), die Einheiten der allgemeinen Formel 2 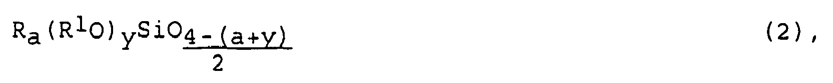 enthalten und Gruppen aufweisen, die ausgewählt werden aus an Siliciumatome gebundenen Hydroxylgruppen und an Siliciumatome gebundenen C₁- bis C₁₈₋Kohlenwasserstoffoxygruppen, wobei **R, R**^{**1**} **,x, a** und **y** die vorstehenden Bedeutungen aufweisen, bei dem die Organosiliciumverbindungen (A) mit
(B) 1 bis 499 Gew.-ppm, bezogen auf die Organosiliciumverbindungen (A) an Aminogruppe enthaltender Verbindung versetzt werden.

Es kann ein einziges oder auch ein Gemisch aus zwei oder mehreren verschiedenen Verbindungen (B) eingesetzt werden.

Vorzugsweise wird Verbindung (B) zur besseren Vermischung bei 20 bis 180°C eingemischt.

Wenn als Verbindung (B) aminofunktionelle Silane eingesetzt werden, können diese alkalisch an Organosiliciumverbindungen (A) kondensiert und anschließend durch Neutralisation und gegebenenfalls Filtration aufgearbeitet werden. Derartige Systeme sind selbststabilisierend.

Die Verbindung (B) kann bei dem Verfahren zur Stabilisierung der Organosiliciumverbindungen (A) direkt nach der Bildung der Organosiliciumverbindungen (A) zugesetzt werden, beispielsweise noch vor der Abtrennung von Lösungsmitteln, Wasser und/oder Alkohol. Die Verbindung (B) kann alternativ erst während der Lagerung der Zusammensetzungen, die Organosiliciumverbindungen (A) enthalten, zugesetzt werden.

Alle vorstehenden Symbole der vorstehenden Formeln weisen ihre Bedeutungen jeweils unabhängig voneinander auf. In allen Formeln ist das Siliciumatom vierwertig.

Anhand der folgenden Beispiele wird die Erfindung näher erläutert. Alle Angaben von Teilen und Prozentsätzen beziehen sich auf das Gewicht. Die Beispiele werden bei einem Druck der umgebenden Atmosphäre, also etwa bei 0,1 MPa, und bei Raumtemperatur, also etwa bei 21 °C, durchgeführt.

### Beispiele 1 bis 3

Zu 100g Methylsiliconharz bestehend aus 73 Gew-% CH₃SiO_{3/2}, 20 Gew-% (CH₃)₂SiO_{2/2}, 6 Gew-% (CH₃) (OC₂H₅)SiO_{2/2}, 1 Gew-% CH₃) (OH) SiO_{2/2}, mit einer Viskosität von 5000 mPas, welches 5 Gew.-ppm freien Chlorwasserstoff und 95 Gew.-ppm an Siliciumatome gebundene Chloratome enthält, werden unterschiedliche Mengen an Triisooctylamin bei 80°C unter Rühren zugesetzt. Die anschliessend bei Raumtemperatur (20 °C) gelagerten Proben des stabilisierten Harzes wiesen folgende Stabilitäten auf:

**Tabelle 1:**

| Beispiel | Aminzusatz [ppm] | Lagerstabilität bei 20°C |
|---|---|---|
| 1* | 0 | geliert nach 14 Wochen |
| 2 | 100 | Viskosität nach 12 Monaten um 30% gestiegen |
| 3* | 1000 | geliert nach 10 Wochen |

| | | |
|---|---|---|
| *nicht erfindungsgemäss | | |

## Patentansprüche

1. Lagerstabile Zusammensetzungen von Organosiliciumverbindungen, welche enthalten
(A) Organosiliciumverbindungen, die ausgewählt werden aus Silanen (A1) der allgemeinen Formel 1
RₓSi(OR¹)₄₋ₓ (1),
und harzartigen Organopolysiloxanen (A2), die Einheiten der allgemeinen Formel 2 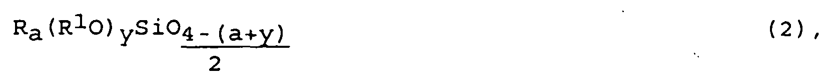 enthalten und Gruppen aufweisen, die ausgewählt werden aus an Siliciumatome gebundenen Hydroxylgruppen und an Siliciumatome gebundenen C₁- bis C₁₈₋Kohlenwasserstoffoxygruppen, wobei
**R** einwertige SiC-gebundene, gegebenenfalls substituierte C₁₋bis C₁₈-Kohlenwasserstoffreste,
**R**^{**1**} ein Wasserstoffatom oder einwertige, gegebenenfalls substituierte C₁- bis C₁₈-Kohlenwasserstoffreste,
**x** die Werte 0, 1, 2 oder 3,
**a** die Werte 0, oder 1, durchschnittlich 0,5 bis 1,5 und
**y** die Werte 1, 2 oder 3 bedeuten und
(B) 1 bis 499 Gew.-ppm, bezogen auf die Organosiliciumverbindungen (A) an Aminogruppe enthaltender Verbindung.

2. Zusammensetzungen nach Anspruch 1, welche 5 bis 250 Gew.-ppm an Aminogruppe enthaltender Verbindung (B) enthalten.

3. Zusammensetzungen nach Anspruch 1 oder 2 bei den die Reste R unsubstituierte Kohlenwasserstoffreste mit 1 bis 8 Kohlenstoffatomen sind.

4. Zusammensetzungen nach Anspruch 1 bis 3, bei den die Reste **R**^{**1**} ausgewählt werden aus C₁-bis C₁₀-Alkylresten.

5. Zusammensetzungen nach Anspruch 1 bis 4, bei den die harzartigen Organopolysiloxane (A2), neben Einheiten der allgemeinen Formel 2 zusätzliche Einheiten der allgemeinen Formel 3, 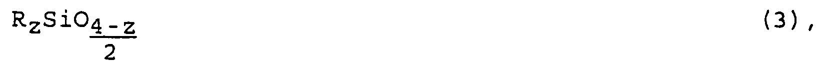 aufweisen, wobei
**z** die Werte 0, 1, 2 oder 3 bedeutet und
**R** die vorstehenden Bedeutungen aufweist.

6. Zusammensetzungen nach Anspruch 1 bis 5, bei den die Reste an der Aminogruppe unsubstituierte C₁-C₁₈₋Kohlenwasserstoffreste sind.

7. Zusammensetzungen nach Anspruch 1 bis 6, bei den die Verbindungen (B) aminofunktionelle Silane der allgemeinen Formel 4
R²ᵤR³ᵥSi(OR⁴)₄₋ᵤ₋ᵥ (4),
sind, in der
**R**^{**2**} einwertige, gegebenenfalls halogensubstituierte, SiC-gebundene C₁-C₂₀-Kohlenwasserstoffreste,
**R**^{**3**} einwertige, gegebenenfalls halogensubstituierte, SiC-gebundene Aminogruppe aufweisende C₁-C₃₀₋Kohlenwasserstoffreste,
R⁴ Wasserstoffatom oder C₁-C₆-Alkylreste,
u 0, 1 oder 2 und
v 1, 2 oder 3 bedeuten,
mit der Maßgabe, daß die Summe aus **u** und **v** kleiner oder gleich 3 ist.

8. Verfahren zur Stabilisierung von
(A) Organosiliciumverbindungen, die ausgewählt werden aus Silanen (A1) der allgemeinen Formel 1
RₓSi(OR¹)₄₋ₓ (1),
und harzartigen Organopolysiloxanen (A2), die Einheiten der allgemeinen Formel 2 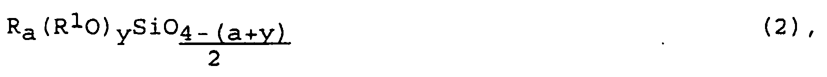 enthalten und Gruppen aufweisen, die ausgewählt werden aus an Siliciumatome gebundenen Hydroxylgruppen und an Siliciumatome gebundenen C₁- bis C₁₈₋Kohlenwasserstoffoxygruppen, wobei **R, R**^{**1**} **,x, a** und **y** die in Anspruch 1 angegebenen Bedeutungen aufweisen, bei dem die Organosiliciumverbindungen (A) mit
(B) 1 bis 499 Gew.-ppm, bezogen auf die Organosiliciumverbindungen (A) an Aminogruppe enthaltender Verbindung versetzt werden.

## Claims

1. Storage-stable compositions of organosilicon compounds which comprise
(A) organosilicon compounds which are selected from silanes (A1) of the general formula 1
RₓSi (OR¹)₄₋ₓ (1)
and resinous organopolysiloxanes (A2) which contain units of the general formula 2 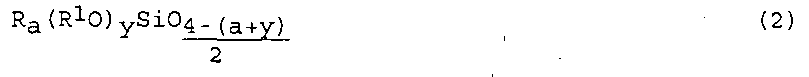 and have groups which are selected from hydroxyl groups bonded to silicon atoms and C₁- to C₁₈-hydrocarboxy groups bonded to silicon atoms, where
**R** is monovalent SiC-bonded, optionally substituted C₁- to C₁₈-hydrocarbon radicals,
**R**^{**1**} is a hydrogen atom or monovalent, optionally substituted C₁- to C₁₈-hydrocarbon radicals,
**x** is 0, 1, 2 or 3,
**a** is 0 or 1, on average 0.5 to 1.5, and
**y** is 1, 2 or 3 and
(B) from 1 to 499 ppm by weight, based on the organosilicon compounds (A), of amino-containing compound.

2. Compositions according to claim 1 which contain from 5 to 250 ppm by weight of amino-containing compound (B).

3. Compositions according to claim 1 or 2 in which the R radicals are each unsubstituted hydrocarbon radicals having from 1 to 8 carbon atoms.

4. Compositions according to claims 1 to 3 in which the **R**^{**1**} radicals are selected from C₁- to C₁₀-alkyl radicals.

5. Compositions according to claims 1 to 4 in which the resinous organopolysiloxanes (A2), in addition to units of the general formula 2, contain additional units of the general formula 3 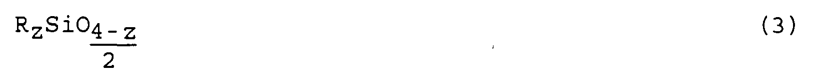 where
z is 0, 1, 2 or 3 and
R is as defined above.

6. Compositions according to claims 1 to 5 in which the radicals on the amino group are unsubstituted C₁-C₁₈₋hydrocarbon radicals.

7. The compositon of claims 1 to 6 in which the compounds (B) are amino-functional silanes of the general formula 4
R²ᵤR³ᵥSi (OR⁴) ₄₋ᵤ₋ᵥ (4)
in which
**R**^{**2**} is a monovalent, optionally halogen-substituted, SiC-bonded C₁-C₂₀-hydrocarbon radical,
**R**^{**3**} is a monovalent, optionally halogen-substituted, SiC-bonded C₁-C₃₀-hydrocarbon radical having an amino group,
**R**^{**4**} is a hydrogen atom or C₁-C₆-alkyl radical,
**u** is 0, 1 or 2 and
**v** is 1, 2 or 3,
with the proviso that the sum of u and v is less than or equal to 3.

8. Process for stabilizing
(A) organosilicon compounds which are selected from silanes (A1) of the general formula 1
RₓSi (OR¹) ₄₋ₓ (1)
and resinous organopolysiloxanes (A2) which contain units of the general formula 2 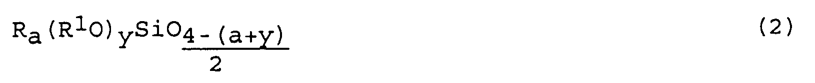 and have groups which are selected from hydroxyl groups bonded to silicon atoms and C₁- to C₁₈-hydrocarboxy groups bonded to silicon atoms, where **R, R**^{**1**} **,x, a** and **y** are each as defined in claim 1, in which the organosilicon compounds (A) are admixed with
(B) from 1 to 499 ppm by weight, based on the organosilicon compounds (A), of amino-containing compound.

## Revendications

1. Compositions stables au stockage de composés organosilicium, qui contiennent :
(A) des composés organosilicium, qui sont choisis parmi les silanes (A1) de formule générale 1
RₓSi (OR¹)₄₋ₓ (1),
et les organopolysiloxanes de type résineux (A2), qui contiennent des unités de formule générale 2 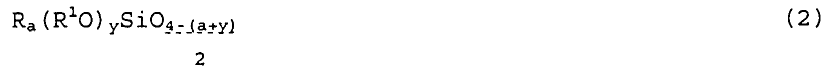 et présentent des groupes qui sont choisis parmi les groupes hydroxyle liés à des atomes de silicium et les groupes hydrocarbyloxy en C₁ à C₁₈ liés à des atomes de silicium, dans lesquels
R représente des radicaux hydrocarbonés monovalents en C₁ à C₁₈, liés à SiC, éventuellement substitués,
R¹ représente un atome d'hydrogène ou des radicaux hydrocarbonés monovalents en C₁ à C₁₈ éventuellement substitués,
x représente les valeurs 0, 1, 2 ou 3,
a représente les valeurs 0 ou 1, en moyenne de 0,5 à 1,5 et
y représente les valeurs 1, 2 ou 3 et
(B) 1 à 499 ppm en poids, par rapport aux composés organosilicium (A) de composé contenant des groupes amino.

2. Compositions selon la revendication 1, qui contiennent 5 à 250 ppm en poids de composé (B) contenant des groupes amino.

3. Compositions selon la revendication 1 ou 2 dans lesquelles les radicaux R sont des radicaux hydrocarbonés non substitués avec 1 à 8 atomes de carbone.

4. Compositions selon les revendications 1 à 3, dans lesquelles les radicaux R¹ sont choisis parmi les radicaux alkyle en C₁ à C₁₀.

5. Compositions selon les revendications 1 à 4, dans lesquelles les organopolysiloxanes de type résineux (A2) présentent, en plus d'unités de formule générale 2 des unités additionnelles de formule générale 3, 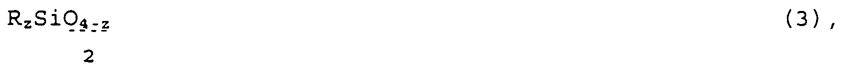 dans laquelle
z représente les valeurs 0, 1, 2 ou 3 et
R présente les significations indiquées plus haut.

6. Compositions selon les revendications 1 à 5, dans lesquelles les radicaux sont des radicaux hydrocarbonés en C₁ à C₁₈ non substitués sur le groupe amino.

7. Compositions selon les revendications 1 à 6, dans lesquelles les composés (B) sont des silanes à fonctionnalité amino de formule générale 4
R²ᵤR³ᵥSi(OR⁴)₄₋ᵤ₋ᵥ (4),
dans laquelle
R² représente des radicaux hydrocarbonés monovalents en C₁ à C₂₀ liés à SiC, éventuellement substitués par un halogène,
R³ représente des radicaux hydrocarbonés monovalents en C₁ à C₃₀ présentant un groupe amino lié à SiC, éventuellement substitués par des halogènes,
R⁴ représente un atome d'hydrogène ou des radicaux alkyle en C₁ à C₆,
u représente 0, 1 ou 2 et
v représente 1, 2 ou 3,
à condition que la somme de u et w soit inférieure ou égale à 3.

8. Procédé de stabilisation de
(A) composés organosilicium, qui sont choisis parmi les silanes (A1) de formule générale 1
RₓSi(OR¹)₄₋ₓ (1),
et les organopolysiloxanes résineux (A2), qui contiennent des unités de formule générale 2 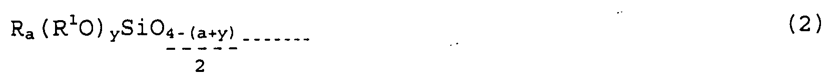 et présentent des groupes, qui sont choisis parmi les groupes hydroxyle liés à un atome de silicium et les groupes hydrocarbyloxy en C₁ à C₁₈ liés à un atome de carbone, dans lesquels R, R¹, x, a et y présentent les significations indiquées dans la revendication 1, dans lequel on peut ajouter aux composés organosilicium (A)
(B) 1 à 499 ppm en poids, par rapport aux composés organosilicium (A), d'un composé contenant un groupe amino.
